# EUROPEAN PATENT SPECIFICATION

(11) **EP 2 976 935 B1**
(45) Date of publication and mention of the grant of the patent: **04.04.2018**
(21) Application number: 14769934.2
(22) Date of filing: 07.03.2014
(51) Int. Cl.: A01C 11/02, A01C 19/00, A01C 11/00

(54) **INCLINED INWARDLY-TRANSPLANTING WITH A WIDE-NARROW ROW TRANSPLANTING MECHANISM**
MECHANISMUS ZUR GENEIGTEN INNERWÄRTIGEN VERPFLANZUNG VON WEITEN UND ENGEN REIHEN
MÉCANISME DE TRANSPLANTATION EN RANGÉES LARGES-ÉTROITES POUR TRANSPLANTATION INCLINÉE VERS L'INTÉRIEUR

(30) Priority: 19.03.2013 CN 201310087172
(43) Date of publication of application: 27.01.2016
(73) Proprietor: Northeast Agricultural University, Harbin, Heilongjiang 150030 (CN); Zhejiang Sci-Tech University, Hangzhou, Zhejiang 310018 (CN)
(72) Inventor: ZHAO, Yun, Harbin Heilongjiang 150030 (CN); SUN, Liang, Hangzhou Zhejiang 310018 (CN); ZHOU, Maile, Hangzhou Zhejiang 310018 (CN); XIN, Liang, Hangzhou Zhejiang 310018 (CN)
(74) Representative: Kransell & Wennborg KB
(86) International application number: PCT/CN2014/073074
(87) International publication number: WO 2014/146545

(56) References cited:
- CN-A- 101 828 456
- CN-A- 102 037 813
- CN-A- 102 172 120
- CN-A- 102 783 297
- CN-A- 103 125 187
- CN-A- 103 493 634
- CN-B- 102 160 489
- CN-U- 201 813 672
- CN-U- 202 535 718
- JP-A- H10 290 610
- JP-A- 2008 092 881

## Description

### Field of the Invention

The present invention belongs to agricultural machinery, which mainly involved an inclined interpolation wide and narrow row spacing rice seedling transplanting mechanism and an automatic potted seedling transplanting mechanism in zigzag movement.

### Background of the Invention

Wide and narrow row spacing rice seedling transplanting can promote the ventilation among the plants and improve the illumination by adjusting the row space of the seedlings. And then it can not only prevent lodging and mitigate disease, but also achieve high quality and high yield, and decrease the cost and increase the efficiency.

The present wide and narrow row spacing rice seedling transplanting mechanisms adopt different structure to fetch the seedlings from the seedling box and then offset outward to plant the seedling in wide row space. The row space between two adjacent transplanting mechanisms is narrow consequently. However the furthest side of the seedlings has wide row space during one direction transplanting. After the transplanter turns around at the edge of the field it has to run along the seedling line in a narrow row space. Therefore hilling mud and dammed water easily occur at the connect seedling line. Even the seedlings may be pushed down which affect the quality of operation.

Further attention is drawn to CN102160489, disclosing a cylindrical spiral gear external gearing inclined wide and narrow row add and drop mechanism for use with an agricultural machinery.

### Summary of the Invention

The invention aims at solving the aforementioned problems of the present technology by designing an inclined interpolation wide and narrow row spacing rice seedling transplanting mechanism. The left and right transplanting mechanisms both offset inward to plant the seedlings after they fetched the seedlings. Therefore the connect seedling line will not have hilling mud and dammed water and the seedlings will not be pushed down.

The objective of the invention is realized as follows. The inclined interpolation wide and narrow row spacing rice seedling transplanting mechanism consists of a power transmission case, a left transplanting mechanism and a right transplanting mechanism; a left power output shaft and a right power output shaft are correspondingly assembled on the left side part and right side part of the power transmission case, wherein the axes of the left power shaft and the right power output shaft are symmetrically arranged, and wherein the left transplanting mechanism and the right transplanting mechanism are perpendicularly attached to the left power output shaft and the right power output shaft respectively to form a V-shaped symmetrical structure with constant seedling taking space and narrow rice seedling transplanting space in the whole; a driven bevel gear is attached to the right power output shaft or the left power output shaft; a driving bevel gear on a main driving shaft in the power transmission case meshes with the driven bevel gear; a left bevel gear and a right bevel gear are respectively attached to the left power output shaft and the right power output shaft and the left bevel gear meshes with the right bevel gear mesh, wherein the transmission ratio is 1:1,
and characterised in that the left power shaft and the right power output shaft incline downwards relative to a horizontal plane, and that the left and right transplanting mechanisms both offset inward to plant seedlings after they fetched the seedlings. It has simple structure and small space occupation, which makes the inward inclined narrow row transplanting possible. It needs low cost and easy installation. The row spacing is increased by 10 cm compared with the transplanted line. Therefore the connect seedling line has less possibility of hilling mud and dammed water and the seedlings avoid being pushed down. The invention is particularly suitable for general riding-type transplanters with high speed operation and integrated floating boards.

Another technical problem to be solved by the invention is to provide an automatic potted seedling transplanting mechanism in zigzag movement based on the above technical scheme. Therefore another aspect of the invention can also adopt the following technical scheme:
An automatic potted seedling transplanting mechanism in zigzag movement includes the afore-mentioned transplanting mechanism, wherein the left transplanting mechanism and the right transplanting mechanism are respectively equipped with a planting arm, and wherein the relative angle of the planet carrier of the left transplanting mechanism to the power transmission case is 180° different from the relative angle of the planet carrier of the right transplanting mechanism to the transmission case.

In order to solve the above technical problems, another aspect of the invention can also adopt the following technical scheme:
An automatic potted seedling transplanting mechanism in zigzag movement includes the afore-mentioned transplanting mechanism, wherein the left transplanting mechanism and the right transplanting mechanism are respectively equipped with two planting arms, and wherein the two planting arms of the left transplanting mechanism have a difference of 180° in their relative angles to its planet carrier, and wherein the two planting arms of the right transplanting mechanism have a difference of 180° in their relative angles to its planet carrier, and wherein the relative angle of the planet carrier of the left transplanting mechanism to the power transmission case is 90° different from the relative angle of the planet carrier of the right transplanting mechanism to the transmission case.
The technology of potted seedling transplanting in zigzag arrangement can form good ventilation among the seedlings, improve the leaf photosynthesis and furthermore increase the yield. By incorporating the above technical scheme, potted seedlings can be transplanted in zigzag arrangement with wide and narrow row space automatically. It fills in a gap that there is no automatic potted seedling transplanter in zigzag arrangement and automatic potted seedling transplanter in zigzag arrangement with wide and narrow row space. Therefore the potted seedling transplanting in zigzag arrangement can be promoted from the manual cultivation stage to mechanization. It has the features of simple structure, low cost, reliable operation, good performance, small vibration and high efficiency.

The features, functions and advantages that have been discussed can be achieved independently in various embodiments of the present invention or may be combined in yet other embodiments further details of which can be seen with reference to the following description and drawings.

### Brief Description of the Drawings

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
Figure 1 is a whole structure diagram illustrating the inclined interpolation wide and narrow row spacing rice seedling transplanting mechanism of the present disclosure;
Figure 2 is a schematic diagram showing the operation of the inclined interpolation wide and narrow row spacing rice seedling transplanting in accordance with the present disclosure, wherein a shows the seedling hole space, b shows the narrow row space in the seedlings, c shows the wide row space in the seedlings, d shows the distance between two transplanting runs, and e shows the offset between the fetching point and planting point;
Figure 3 is a schematic showing the automatic wide and narrow row spacing potted seedling transplanting mechanism in zigzag arrangement with single planting arm in accordance with the present disclosure;
Figure 4 is a lateral view of the left and right transplanting mechanism shown in Figure 3;
Figure 5 is a schematic showing the automatic wide and narrow row spacing potted seedling transplanting mechanism in zigzag arrangement with double planting arm in accordance with the present disclosure;
Figure 6 is a lateral view of the left and right transplanting mechanism shown in Figure 5;
Figure 7 shows the seedling layout after the seedlings are transplanted by the wide and narrow row spacing potted seedling transplanting mechanism in zigzag arrangement of the present disclosure, wherein the seedlings denoted by 100 have a zigzag layout in wide and narrow row space;
Figure 8 shows the zigzag layout of seedlings in equal row space wherein the seedlings denoted by 100 have a zigzag layout in equal row space, not the zigzag layout in wide and narrow row space shown in Figure 7; and
Figure 9 shows the traditional layout of seedlings in equal row space wherein a rectangular isometric planting layout with equal row space is presented.

### Detailed Description of the Invention

In the following description, reference is made to the accompanying drawings, which form a part hereof, and in which is shown, by way of illustration, various embodiments of the present disclosure. It is understood that other embodiments may be utilized and changes may be made without departing from the scope of the present invention.

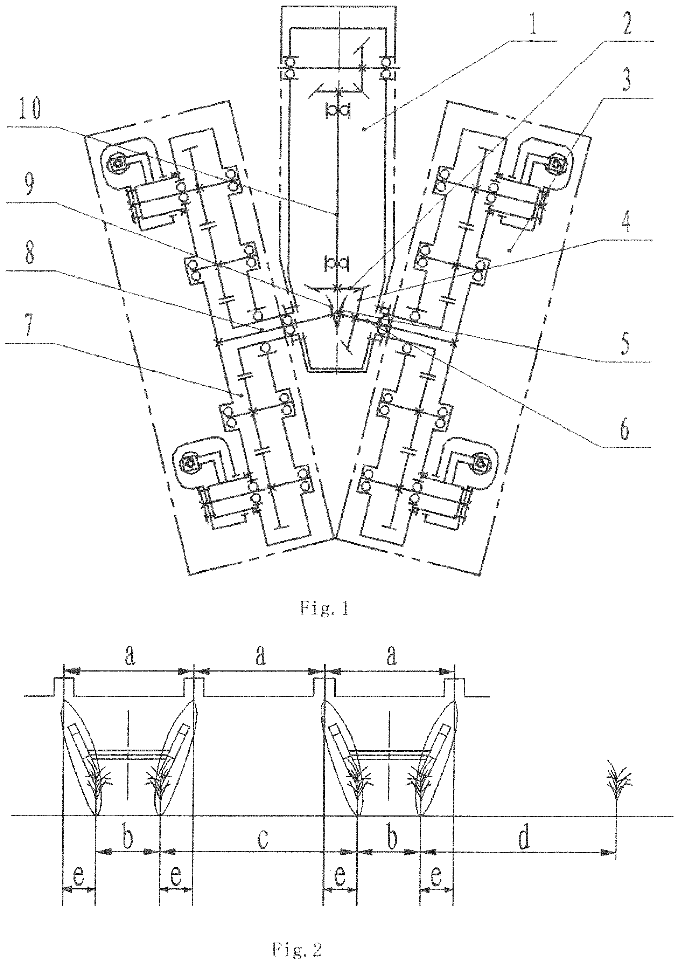

As shown in Figures 1 and 2, the inclined interpolation wide and narrow row spacing rice seedling transplanting mechanism of the present disclosure consists of a power transmission case (1), a left transplanting mechanism (7) and a right transplanting mechanism (3); a left power output shaft (8) and a right power output shaft (6) are correspondingly assembled on the left side part and right side part of the power transmission case (1), wherein the axes of the left power shaft (8) and the right power output shaft (6) are symmetrically arranged and incline downwards relative to the horizontal plane, and wherein the left transplanting mechanism (7) and the right transplanting mechanism (3) are perpendicularly attached to the left power output shaft (8) and the right power output shaft (6) respectively to form a V-shaped symmetrical structure with constant seedling taking space and narrow rice seedling transplanting space in the whole; a driven bevel gear (4) is attached to the right power output shaft (6) or the left power output shaft (8); a driving bevel gear (2) on a main driving shaft (10) in the power transmission case (1) meshes with the driven bevel gear (4); a left bevel gear (9) and a right bevel gear (5) are respectively attached to the left power output shaft (8) and the right power output shaft (6) and the left bevel gear (9) meshes with the right bevel gear mesh (5), wherein the transmission ratio is 1:1.

In the wide and narrow row spacing transplanting process, the power is brought to the driven bevel gear (4) from the main shaft (10) and the driving bevel gear (2) in the power transmission case (1). The driven bevel gear (4) makes the right bevel gear (5) rotate through the right power output shaft (6). Then the right bevel gear (5) makes the left bevel gear (9) rotate and further makes the left power output shaft (8) rotate. The left power output shaft (8) and right power output shaft (6) make the left transplanting mechanism (7) and right transplanting mechanism (3) rotate respectively. Finally the wide and narrow row spacing transplanting is achieved.

In the inclined interpolation wide and narrow row spacing transplanting mechanism, the left transplanting mechanism (7) and right transplanting mechanism (3) fetch the seedling at the seedling holes and then offset a distance of e inward. Therefore the seedlings are planted in a narrow row space of b by the left transplanting mechanism (7) and right transplanting mechanism (3). Meanwhile the right transplanting mechanism (3) forms a wide row space of c with the left transplanting mechanism (7) of the adjacent assembly. The seedling rows at the furthest sides are narrow row space. So when the transplanter turns around at the edge of the field and conducts the next transplanting operation, the side seedlings will form a wide row space of d with the side seedlings planted in the previous operation. The invention can effectively finish the wide and narrow row spacing transplanting without hilling mud, dammed water and pushing down the seedlings.

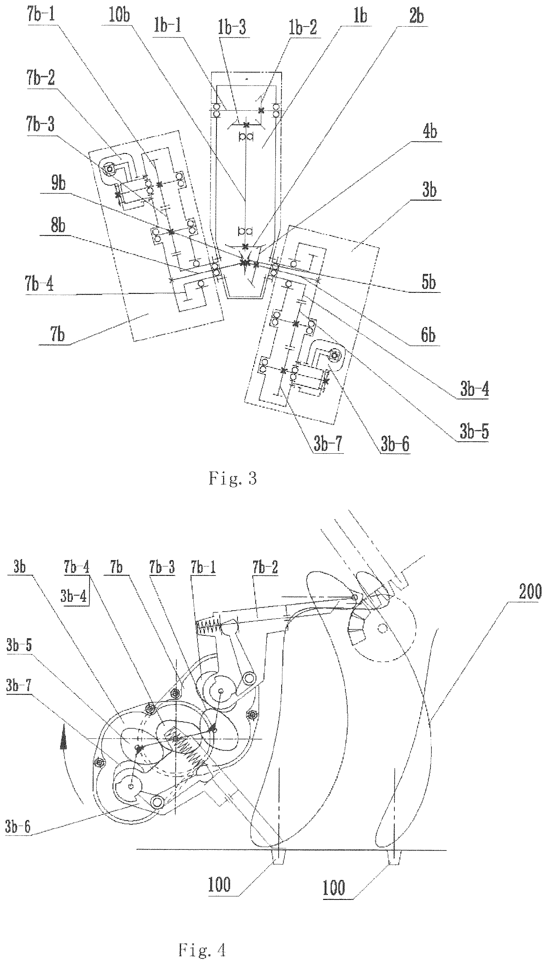

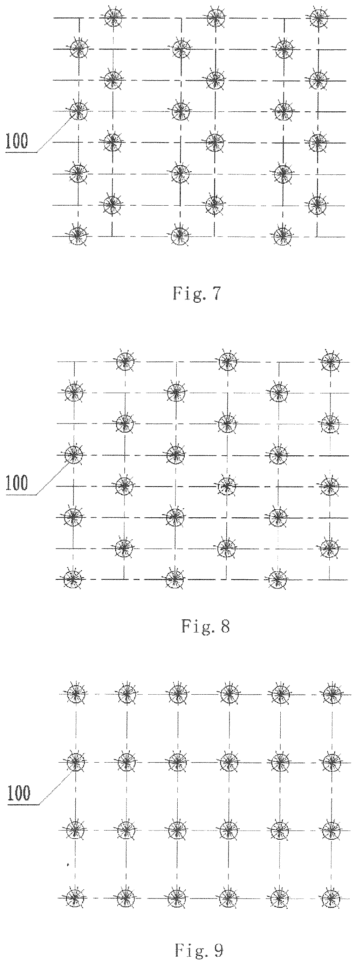

Referring also to Figures 3, 4 and 7, the power from the power input shaft (1b-1) is transmitted to the main shaft (10b) by the meshing between the power input bevel gear (1b-2) and the first bevel gear (1b-3) mounted on the shaft (1b-1). Then the driving bevel gear (2b) mounted at the other end of the shaft (10b) rotates with the shaft (10b) and meshes with the driven bevel gear (4b) which is mounted on the right power output shaft (6b). Then the shaft (6b) rotates with the gear (4b) and makes the right bevel gear (5b) rotate. The right bevel gear (5b) meshes with the left bevel gear (9b). The left power output shaft (8b) rotates with the left bevel gear (9b). The left power output shaft (8b) and right power output shaft (6b) make the left transplanting mechanism (7b) and right transplanting mechanism (3b) rotate respectively. The left center gear (7b-4) in the left transplanting mechanism (7b) bushes on the left power output shaft (8b) and meshes with the left intermediate gear (7b-3) fastened on the left intermediate shaft. The transmission make the left planetary gear (7b-1) rotate, which is fastened on the left planetary shaft. And then the left planting arm (7b-2) fastened on the left planetary shaft is driven to fetch the potted seedling from the seedling box and plant it in the soil. The right center gear (3b-4) in the right transplanting mechanism (3b) bushes on the right power output shaft (6b) and meshes with the right intermediate gear (3b-5) fastened on the right intermediate shaft. The transmission make the right planetary gear (3b-7) rotate, which is fastened on the right planetary shaft. And then the right planting arm (3b-6) fastened on the right planetary shaft is driven to fetch the potted seedling from the seedling box and plant it in the soil. The planet carrier of the left transplanting mechanism (7b) has a difference of 180° in the installation angle comparing with the planet carrier of the right transplanting mechanism (3b). The left and right planting arms fetch the seedlings and plant them in the soil alternately. Therefore the seedlings form a zigzag layout in wide and narrow row space as shown in Figure 7.

In the accompany drawings, the denotation 100 represent the transplanted seedlings and the denotation 200 represent the trajectory of the left planting arm (7b-2) and right planting arm (3b-6).

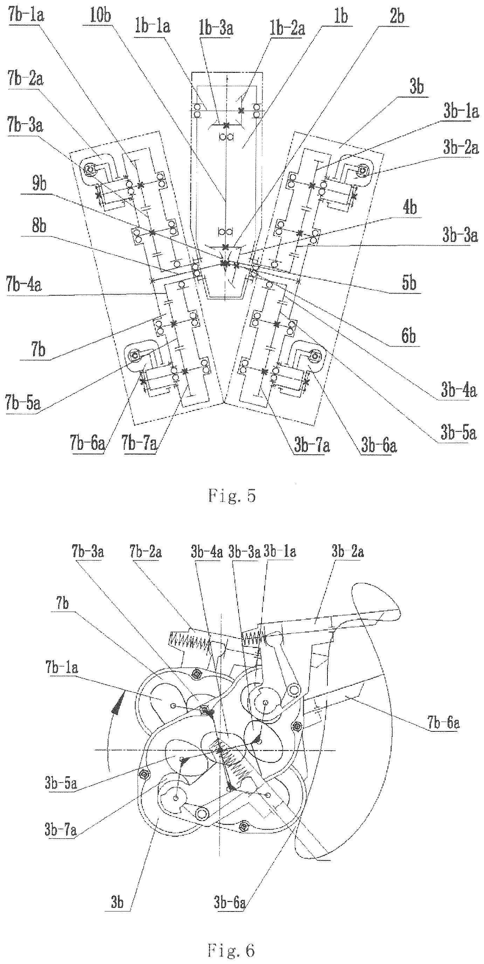

Referring also to Figures 5, 6 and 7, the power from the power input shaft (1b-1) is transmitted to the main shaft (10b) by the meshing between the power input bevel gear (1b-2) and the first bevel gear (1b-3) mounted on the shaft (1b-1). Then the driving bevel gear (2b) mounted at the other end of the shaft (10b) rotates with the shaft (10b) and meshes with the driven bevel gear (4b) which is mounted on the right power output shaft (6b). Then the shaft (6b) rotates with the gear (4b) and makes the right bevel gear (5b) rotate. The right bevel gear (5b) meshes with the left bevel gear (9b). The left power output shaft (8b) rotates with the left bevel gear (9b). The left power output shaft (8b) and right power output shaft (6b) make the left transplanting mechanism (7b) and right transplanting mechanism (3b) rotate respectively. The left center gear (7b-4) in the left transplanting mechanism (7b) bushes on the left power output shaft (8b), meshes with the left-top intermediate gear (7b-3) fastened on the left-top intermediate shaft and also meshes with the left-down intermediate gear (7b-5) fastened on the left-down intermediate shaft. The transmission makes the left-top planetary gear (7b-1) rotate, which is fastened on the left-top planetary shaft and also makes the left-down planetary gear (7b-7) rotate which is fastened on the left-down planetary shaft. And then the left-top planting arm (7b-2) fastened on the left-top planetary shaft and the left-down planting arm (7b-6) fastened on the left-down planetary shaft are driven to fetch the potted seedling from the seedling box in turn and plant it in the soil. The right center gear (3b-4) in the right transplanting mechanism (3b) bushes on the right power output shaft (6b), meshes with the right-top intermediate gear (3b-3) fastened on the right-top intermediate shaft and also meshes with the right-down intermediate gear (3b-5) fastened on the right-down intermediate shaft. The transmission makes the right-top planetary gear (3b-1) rotate, which is fastened on the right-top planetary shaft and also makes the right-down planetary gear (3b-7) rotate which is fastened on the right-down planetary shaft. And then the right-top planting arm (3b-2) fastened on the right-top planetary shaft and the right-down planting arm (3b-6) fastened on the right-down planetary shaft are driven to fetch the potted seedling from the seedling box in turn and plant it in the soil. The left-top planting arm (7b-2) has a difference of 180° in the relative angle to the planet carrier comparing with the left-down planting arm (7b-6). The right-top planting arm (3b-2) has a difference of 180° in the relative angle to the planet carrier comparing with the right-down planting arm (3b-6). The planet carrier of the left transplanting mechanism (7b) has a difference of 90° in the installation angle comparing with the planet carrier of the right transplanting mechanism (3b). Therefore the present disclosure can also plant the seedlings into a zigzag layout in wide and narrow row space as shown in Figure 7. But the transplanting efficiency doubles. That is to say, in one revolution of the central shaft, the left-top, left-down, right-top and right-down planting arms transplant the seedlings in turn. There are 4 holes of seedlings planted in one revolution.

The center gear, intermediate gear and planetary gear of the transplanting mechanism in the present disclosure are all non-circular gear. The planet carrier in the present disclosure is the installation frame of the gearbox of the transplanting mechanism.

## Claims

1. An inclined interpolation wide and narrow row spacing rice seedling transplanting mechanism, including a power transmission case (1), a left transplanting mechanism (7) and a right transplanting mechanism (3);
a left power output shaft (8) and a right power output shaft (6) are correspondingly assembled on the left side part and right side part of the power transmission case (1), wherein the axes of the left power shaft (8) and the right power output shaft (6) are symmetrically arranged, and wherein the left transplanting mechanism (7) and the right transplanting mechanism (3) are perpendicularly attached to the left power output shaft (8) and the right power output shaft (6) respectively to form a V-shaped symmetrical structure with constant seedling taking space and narrow rice seedling transplanting space in the whole;
a driven bevel gear (4) is attached to the right power output shaft (6) or the left power output shaft (8);
a driving bevel gear (2) on a main driving shaft (10) in the power transmission case (1) meshes with the driven bevel gear (4);
a left bevel gear (9) and a right bevel gear (5) are respectively attached to the left power output shaft (8) and the right power output shaft (6) and the left bevel gear (9) meshes with the right bevel gear mesh (5), wherein the transmission ratio is 1:1, **characterized in that** the left power shaft (8) and the right power output shaft (6) incline downwards relative to a horizontal plane, and that the left (7) and right (3) transplanting mechanisms both offset inward to plant seedlings after they fetched the seedlings.

2. An automatic potted seedling transplanting mechanism in zigzag movement, including the transplanting mechanism of claim 1, wherein the left transplanting mechanism (7) and the right transplanting mechanism (3) are respectively equipped with a planting arm, and wherein the relative angle of the planet carrier of the left transplanting mechanism (7) to the power transmission case (1) is 180° different from the relative angle of the planet carrier of the right transplanting mechanism (3) to the transmission case (1).

3. An automatic potted seedling transplanting mechanism in zigzag movement, including the transplanting mechanism of claim 1, wherein the left transplanting mechanism (7) and the right transplanting mechanism (3) are respectively equipped with two planting arms, and wherein the two planting arms of the left transplanting mechanism (7) have a difference of 180° in their relative angles to its planet carrier, and wherein the two planting arms of the right transplanting mechanism (3) have a difference of 180° in their relative angles to its planet carrier, and wherein the relative angle of the planet carrier of the left transplanting mechanism (7) to the power transmission case (1) is 90° different from the relative angle of the planet carrier of the right transplanting mechanism (3) to the transmission case (1).

## Patentansprüche

1. Reissetzling-Interpolationsmechanismus zur geneigten Verpflanzung von weiten und engen Reihenabständen aufweisend ein Kraftübertragungsgehäuse (1), einen linken Verpflanzungsmechanismus (7) und einen rechten Verpflanzungsmechanismus (3);
eine linke Kraftabtriebswelle (8) und eine rechte Kraftabtriebswelle (6) sind übereinstimmend am linken Seitenabschnitt und am rechten Seitenabschnitt des Kraftübertragungsgehäuses (1) montiert; wobei die Achsen der linken Kraftabtriebswelle (8) und der rechten Kraftabtriebswelle (6) symmetrisch angeordnet sind, und wobei der linke Verpflanzungsmechanismus (7) und der rechte Verpflanzungsmechanismus (3) senkrecht zur linken Kraftabtriebswelle (8) beziehungsweise zur rechten Kraftabtriebswelle (6) angebracht sind, um im Gesamten eine keilförmige symmetrische Konstruktion mit gleichmäßigem Setzlingsaufnahmeraum und engem Reissetzling-Verpflanzungsraum zu schaffen;
ein getriebenes Kegelrad (4) ist an der rechten Kraftabtriebswelle (6) oder der linken Kraftabtriebswelle (8) angebracht;
ein antreibendes Kegelrad (2) an der Hauptantriebswelle (10) im Kraftübertragungsgehäuse (1) greift in das angetriebene Kegelrad (4) ein;
ein linkes Kegelrad (9) und ein rechtes Kegelrad (5) sind an der linken Kraftabtriebswelle (8) beziehungsweise der rechten Kraftabtriebswelle (6) angebracht, und das linke Kegelrad (9) greift in den Zahneingriff des rechten Kegelrads (5) ein, wobei das Übersetzungsverhältnis 1:1 beträgt,
**dadurch gekennzeichnet, dass** die linke Kraftabtriebswelle (8) und die rechte Kraftabtriebswelle (6) in Bezug auf eine horizontale Ebene nach unten geneigt sind, und dass sich sowohl der linke (7) als auch der rechte (3) Verpflanzungsmechanismus nach innen verschieben, um Setzlinge zu pflanzen, nachdem sie diese Setzlinge herausgeholt haben.

2. Automatischer Verpflanzungsmechanismus für Topfsetzlinge mit Zickzack-Bewegung, aufweisend den Verpflanzungsmechanismus von Anspruch 1, wobei der linke Verpflanzungsmechanismus (7) und der rechte Verpflanzungsmechanismus (3) jeweils mit einem Pflanzarm versehen sind, und wobei sich der relative Winkel des Planetenträgers des linken Verpflanzungsmechanismus (7) zum Kraftübertragungsgehäuse (1) um 180° vom relativen Winkel des Planetenträgers des rechten Verpflanzungsmechanismus (3) zum Übertragungsgehäuse (1) unterscheidet.

3. Automatischer Verpflanzungsmechanismus für Topfsetzlinge mit Zickzack-Bewegung, aufweisend den Verpflanzungsmechanismus von Anspruch 1, wobei der linke Verpflanzungsmechanismus (7) und der rechte Verpflanzungsmechanismus (3) jeweils mit zwei Pflanzarmen versehen sind, und wobei die zwei Pflanzarme des linken Verpflanzungsmechanismus (7) einen Unterschied ihrer relativen Winkel zu dessen Planetenträger von 180° aufweisen, und wobei die zwei Pflanzarme des rechten Verpflanzungsmechanismus (3) einen Unterschied ihrer relativen Winkel zu dessen Planetenträger von 180° aufweisen, und wobei sich der relative Winkel des Planetenträgers des linken Verpflanzungsmechanismus (7) zum Kraftübertragungsgehäuse (1) um 90° vom relativen Winkel des Planetenträgers des rechten Verpflanzungsmechanismus (3) zum Übertragungsgehäuse (1) unterscheidet.

## Revendications

1. Mécanisme de transplantation de semis de riz en rangées grandement et faiblement espacées par interpolation inclinée, comprenant un boîtier de transmission de puissance (1), un mécanisme de transplantation de gauche (7) et un mécanisme de transplantation de droite (3) ; dans lequel
un arbre de sortie de puissance de gauche (8) et un arbre de sortie de puissance de droite (6) sont assemblés de façon correspondante sur la partie du côté gauche et la partie du côté droit du boîtier de transmission de puissance (1), dans lequel les axes de l'arbre de sortie de puissance de gauche (8) et de l'arbre de sortie de puissance de droite (6) sont disposés de façon symétrique, et dans lequel le mécanisme de transplantation de gauche (7) et le mécanisme de transplantation de droite (3) sont fixés perpendiculairement à l'arbre de sortie de puissance de gauche (8) et à l'arbre de sortie de puissance de droite (6) respectivement pour former une structure symétrique en forme de V avec un espace de recueil de semis constant et un espace de transplantation de semis de riz étroit dans l'ensemble ;
un engrenage conique entraîné (4) est fixé à l'arbre de sortie de puissance de droite (6) ou à l'arbre de sortie de puissance de gauche (8) ;
un engrenage conique d'entraînement (2) sur un arbre d'entraînement principal (10) dans le boîtier de transmission de puissance (1) engrène avec l'engrenage conique entraîné (4) ;
un engrenage conique de gauche (9) et un engrenage conique de droite (5) sont fixés respectivement à l'arbre de sortie de puissance de gauche (8) et à l'arbre de sortie de puissance de droite (6), et l'engrenage conique de gauche (9) engrène avec l'engrenage conique de droite (5), le rapport de transmission étant de 1:1,
**caractérisé en ce que** l'arbre de sortie de puissance de gauche (8) et l'arbre de sortie de puissance de droite (6) s'inclinent vers le bas par rapport à un plan horizontal, et **en ce que** les mécanismes de transplantation de gauche (7) et de droite (3) sont tous deux décalés vers l'intérieur pour planter des semis après avoir récupéré les semis.

2. Mécanisme de transplantation de semis en pots dans un mouvement de zigzag, comprenant le mécanisme de la revendication 1, dans lequel le mécanisme de transplantation de gauche (7) et le mécanisme de transplantation de droite (3) sont équipés respectivement d'un bras de plantation, et dans lequel l'angle relatif du support planétaire du mécanisme de transplantation de gauche (7) par rapport au boîtier de transmission de puissance (1) est différent de 180° de l'angle relatif du support planétaire du mécanisme de transplantation de droite (3) par rapport au boîtier de transmission (1).

3. Mécanisme de transplantation de semis en pots dans un mouvement de zigzag, comprenant le mécanisme de la revendication 1, dans lequel le mécanisme de transplantation de gauche (7) et le mécanisme de transplantation de droite (3) sont équipés respectivement de deux bras de plantation, et dans lequel les deux bras de plantation du mécanisme de transplantation de gauche (7) présentent une différence de 180° dans leurs angles relatifs par rapport à leur support planétaire, et dans lequel les deux bras de plantation du mécanisme de transplantation de droite (3) présentent une différence de 180° dans leurs angles relatifs par rapport à leur support planétaire, et dans lequel l'angle relatif du support planétaire du mécanisme de transplantation de gauche (7) par rapport au boîtier de transmission de puissance (1) est différent de 90° de l'angle relatif du support planétaire du mécanisme de transplantation de droite (3) par rapport au boîtier de transmission (1).
